# EUROPEAN PATENT APPLICATION

(11) **EP 4 835 616 A1**
(43) Date of publication of application: **04.11.2026**
(21) Application number: 24896193.0
(22) Date of filing: 04.11.2024
(51) Int. Cl.: G06F 3/01

(54) **INFORMATION INPUT METHOD, APPARATUS, WEARABLE DEVICE AND COMPUTER-READABLE STORAGE MEDIUM**

(30) Priority: 29.11.2023 CN 202311623065
(71) Applicant: Meta-Bounds Inc., Zhuhai, Guangdong 519000 (CN)
(72) Inventor: HU, Litian, Zhuhai, Guangdong 519000 (CN); HUANG, Yiran, Zhuhai, Guangdong 519000 (CN); YANG, Peng, Zhuhai, Guangdong 519000 (CN)
(74) Representative: Agca Kizil, Tugce
(86) International application number: PCT/CN2024/129769
(87) International publication number: WO 2025/113102

(57) **Abstract**

The present disclosure relates to an information input method, an information input apparatus, a wearable device, and a computer-readable storage medium. The information input method includes: detecting a carrier medium within a captured field of view of the wearable device; obtaining position information of the carrier medium; displaying an input interface of the wearable device according to the position information of the carrier medium, wherein the input interface is located on the carrier medium; and in response to receiving an input operation on the input interface, determining input information according to the input operation.

## Description

### CROSS-REFERENCE TO RELATED APPLICATIONS

This application claims priority to Chinese Patent Application No. 202311623065.7, entitled "Information Input Method, Information Input Apparatus, Wearable Device, and Computer-Readable Storage Medium", and filed on November 29, 2023, which is incorporated herein by reference.

### TECHNICAL FIELD

The present disclosure relates to the technical field of human-computer interaction, and in particular, to an information input method, an information input apparatus, a wearable device, and a computer-readable storage medium.

### BACKGROUND

In existing wearable devices, such as AR/VR glasses, the text input function is a critical function of human-computer interaction. One conventional implementation relies on cross-screen input via a mobile phone. Although this approach enables human-computer interaction through text entry, it requires a user to utilize an input interface displayed on the mobile phone as a text input terminal to complete text input for the AR/VR glasses. That is, when completing text input on the AR/VR glasses, the user is required to wear the AR/VR glasses while carrying a mobile phone with text input capability. When the mobile phone is not within the user's reach, the AR/VR glasses cannot support text input at all, resulting in inconvenient user operation and degraded user experience. Accordingly, during human-computer interaction involving text input on wearable devices, there remains an urgent need for a solution that improves user convenience and enables reliable information input for wearable devices in the course of information interaction with the wearable devices.

### SUMMARY OF THE INVENTION

The present disclosure provides an information input method, an information input apparatus, a wearable device, and a computer-readable storage medium, so that during human-computer interaction with the wearable device, the user can complete information input on the wearable device end more conveniently.

In a first aspect, the present disclosure provides an information input method applied to a wearable device, the information input method includes:
detecting a carrier medium within a captured field of view of the wearable device;
obtaining position information of the carrier medium;
displaying an input interface of the wearable device according to the position information of the carrier medium, in which the input interface is located on the carrier medium; and
in response to receiving an input operation on the input interface, determining input information according to the input operation.

In a second aspect, the present disclosure further provides an information input apparatus, the information input apparatus includes:
a carrier medium detection module, configured to detect a carrier medium within a captured field of view of the wearable device;
a position information acquisition module, configured to obtain position information of the carrier medium;
an input interface display module, configured to display an input interface of the wearable device according to the position information of the carrier medium, in which the input interface is located on the carrier medium; and
an input information determination module, configured to, in response to receiving an input operation on the input interface, determine input information according to the input operation.

In a third aspect, the present disclosure further provides a wearable device; the wearable device includes a memory and a processor, the memory is configured to store a computer program; the processor is configured to execute the computer program and, when executing the computer program, implement the above information input method.

In a fourth aspect, the present disclosure further provides a computer-readable storage medium, the computer-readable storage medium stores a computer program; when the computer program is executed by a processor, the processor is caused to implement the above information input method.

The present disclosure discloses an information input method, an information input apparatus, a wearable device, and a computer-readable storage medium. The information input method includes: detecting a carrier medium within a captured field of view of an image capture device of the wearable device; obtaining position information of the carrier medium; then displaying an input interface of the wearable device according to the position information of the carrier medium, in which the input interface is located on the carrier medium; and in response to receiving an input operation on the input interface, determining input information according to the input operation. In the above information input method, by obtaining the position information of the carrier medium and displaying the input interface of the wearable device according to the position information of the carrier medium, in which the position at which the input interface is displayed is on the carrier medium, after positioning and completing the input interface, the user can perform related input operations on the input interface and determine input information according to the operations. During human-computer interaction between the user and the wearable device, a virtual input interface is displayed on the carrier medium and information input is performed on the virtual input interface without relying on other physical input interfaces, improving user convenience.

### BRIEF DESCRIPTION OF THE DRAWINGS

To more clearly illustrate the technical solutions of the embodiments of the present disclosure, the drawings in the description of the embodiments will be briefly introduced below. The drawings in the following description are some embodiments of the present disclosure. For a person of ordinary skill in the art, other drawings can also be obtained based on these drawings without creative effort.
FIG. 1 is a schematic block diagram of a structure of a wearable device provided by an embodiment of the present disclosure;
FIG. 2 is a schematic flowchart of an information input method provided by an embodiment of the present disclosure;
FIG. 3 is a schematic flowchart of another information input method provided by an embodiment of the present disclosure;
FIG. 4 is a schematic block diagram of another information input method provided by an embodiment of the present disclosure;
FIG. 5 is a display effect diagram of an input interface provided by an embodiment of the present disclosure;
FIG. 6 is a schematic block diagram of an information input apparatus provided by an embodiment of the present disclosure.

### DETAILED DESCRIPTION OF EMBODIMENTS

The technical solutions in the embodiments of the present disclosure will be clearly and completely described below with reference to the drawings in the embodiments of the present disclosure. The described embodiments are part of the embodiments of the present disclosure, rather than all of the embodiments. Based on the embodiments in the present disclosure, all other embodiments obtained by a person of ordinary skill in the art without creative effort shall fall within the protection scope of the present disclosure.

The flowcharts shown in the drawings are merely examples and do not have to include all the content and operations/steps, nor do they have to be performed in the order described. For example, some operations/steps can also be decomposed, combined, or partially merged, so the actual execution order may change according to actual situations.

It should be understood that the terms used in the specification of the present disclosure are for the purpose of describing embodiments and are not intended to limit the present disclosure. In the specification of the present disclosure and the appended claims, the singular forms "a", "an", and "the" are intended to include the plural forms unless the context clearly indicates otherwise.

It should also be understood that the term "and/or" used in the specification of the present disclosure and the appended claims refers to any combination of one or more of the associated listed items and all possible combinations, and includes these combinations.

The embodiments of the present disclosure provide an information input method, an information input apparatus, a wearable device, and a computer-readable storage medium. The information input method can be applied to a wearable device. By obtaining position information of a carrier medium and displaying an input interface of the wearable device according to the position information of the carrier medium, in which the input interface is located on the carrier medium, the user inputs information on the input interface and the information is displayed. The input interface of the wearable device is a virtual input interface presented by the wearable device and does not require other physical input interfaces, improving user convenience.

The wearable device can be a wearable device such as AR glasses, a smart bracelet, or a smart watch.

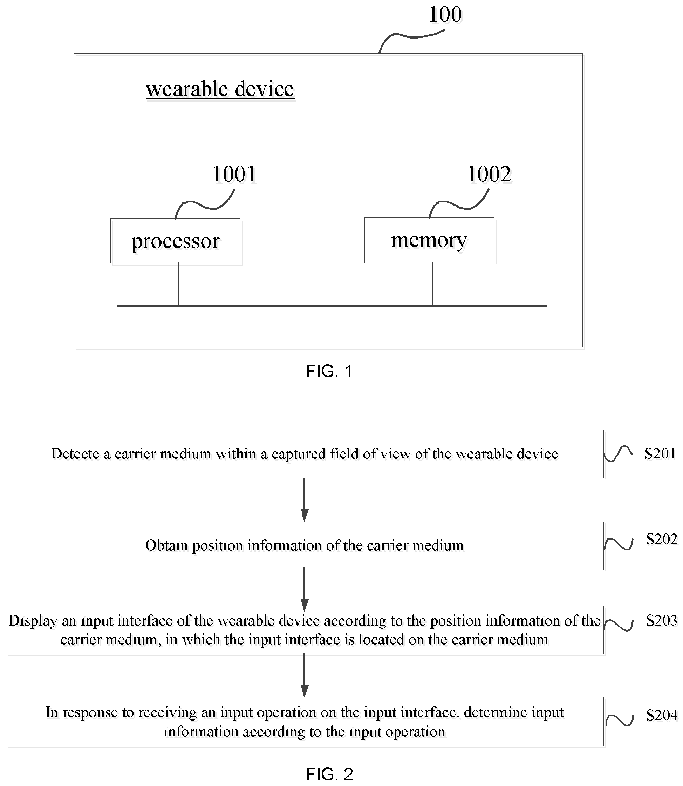

With reference to FIG. 1, FIG. 1 is a schematic block diagram of a structure of a wearable device 100 provided by an embodiment of the present disclosure. In FIG. 1, the wearable device 100 includes a processor 1001 and a memory 1002, in which the processor 1001 and the memory 1002 are connected via a bus. The bus is, for example, any suitable bus such as an Inter-Integrated Circuit (I2C) bus.

The memory 1002 may include a storage medium and an internal memory. The storage medium may be a volatile storage medium or a non-volatile storage medium. The storage medium may store an operating system and a computer program. The computer program includes program instructions, and when the program instructions are executed, the processor 1001 can be caused to execute any information input method in the embodiments of the present disclosure.

The processor 1001 is configured to provide computing and control capabilities to support the operation of the entire wearable device 100.

The processor 1001 may be a Central Processing Unit (CPU), or the processor may be a general-purpose processor, a Digital Signal Processor (DSP), an Application Specific Integrated Circuit (ASIC), a Field-Programmable Gate Array (FPGA), or other programmable logic devices, discrete gates or transistor logic devices, discrete hardware components, and other types of processors. A general-purpose processor may be a microprocessor, or the general-purpose processor may be any conventional processor, etc.

In addition to the processor and the memory, the wearable device 100 further includes a camera, a depth sensor, a display device, etc., in which the camera may also be referred to as an image capture device. The image capture device is used to capture the surrounding environment and the user of the wearable device, to capture within its captured field of view to determine whether there is a preset carrier medium within its captured field of view. The carrier medium is, for example, the user's palm, a book, or a writing pad. The depth sensor is, for example, a depth camera or a binocular camera, and is used to measure the distance from a target object (such as the carrier medium) to the wearable device. The display device is used to display information, for example, to display an input interface and input information.

In some embodiments, the wearable device may be a smart watch, a smart bracelet, AR glasses, etc. Taking AR glasses as an example, the AR glasses include a camera, a depth sensor, and a display device, etc. The display device may be a waveguide display module of the AR glasses and be used to present virtual information to the user.

Some implementations of the present disclosure will be described in detail below with reference to the drawings. The following embodiments and features in the embodiments may be combined with each other in cases of no conflict.

With reference to FIG. 2, FIG. 2 is a schematic flowchart of an information input method provided by an embodiment of the present disclosure. The information input method can be applied to a wearable device.

With reference to FIG. 2, the information input method includes steps S201 to S204.

S201: Detecting a carrier medium within a captured field of view of the wearable device.

In some embodiments, the user can trigger the wearable device to capture through a button, voice, gesture action, etc., and detect the carrier medium within the field of view of the wearable device. For example, the user can touch a start capturing button of the wearable device to make the wearable device enter a capturing state. The wearable device captures the images within its captured field of view and detects whether there is a carrier medium in the captured images according to the capture results. When the wearable device detects that there is a carrier medium in the captured images, it continues to execute the subsequent steps of the information input method. When the wearable device detects that there is no carrier medium in the captured images, it terminates the execution of the subsequent steps of the information input method.

It should be noted that the carrier medium is a preset carrier medium of the wearable device. When the carrier medium in the captured image is the same as the preset carrier medium, the wearable device determines that there is a carrier medium within the captured field of view. When there is no preset carrier medium in the captured image, the wearable device determines that there is no carrier medium within the captured field of view. In addition, the user can also use voice, for example, the user issues a voice command: "I want to capture". After receiving the above voice command issued by the user, the wearable device automatically captures images within the captured field of view and detects whether there is a carrier medium in the captured images according to the capture results. The process of the wearable device detecting whether there is a carrier medium in the captured images is the same as the above method and will not be repeated here.

In some embodiments, the carrier medium may be the user's palm, cardboard, book, etc.; the wearable device may be any wearable device such as Augmented Reality (AR) glasses, Virtual Reality (VR) glasses, a smart watch, or a smart bracelet.

In some embodiments, before detecting a carrier medium within the captured field of view of the wearable device, a gesture action of the user is obtained; when the gesture action of the user matches a preset input gesture action, the wearable device is controlled to enter an input interface mode, and a carrier medium within the captured field of view of the wearable device is detected. The preset input gesture action may be two palm pinches or other reasonable preset input gesture actions. For example, when the gesture action of the user is two palm pinches, the gesture action of the user matches the preset input gesture action. At this time, the wearable device is controlled to enter the input interface mode, and a carrier medium within the captured field of view of the wearable device is detected. In other embodiments, when the gesture action of the user is two fists or any gesture action other than two palm pinches, the gesture action of the user does not match the preset input gesture action. At this time, the wearable device does not perform the operation of entering the input interface mode, and the information input method ends.

In some embodiments, the captured field of view of the wearable device may be the captured field of view detected by the camera in the wearable device. The captured field of view may be within a captured field angle of 60° or 80° and a distance of 70 cm or 80 cm from the wearable device. There is no limitation on the value of the field angle within the captured field of view and the distance that the wearable device can detect, which can be reasonably set according to the actual application scenario.

In some embodiments, the wearable device detects the carrier medium within its own captured field of view. When the wearable device detects the carrier medium within its own captured field of view, it continues to execute the subsequent steps of the information input method. When the wearable device does not detect the carrier medium within its own captured field of view, it terminates the execution process of the information input method.

S202: Obtaining position information of the carrier medium.

In some embodiments, the position information of the carrier medium can be obtained based on a depth sensor through triangulation or other methods, the depth sensor may be a depth camera or a binocular camera.

In some embodiments, the position information of the carrier medium can be obtained by capturing the carrier medium with the wearable device, and the position of the carrier medium in the captured image is obtained by the wearable device through capturing the carrier medium.

In some embodiments, when there is a carrier medium within the captured field of view, before obtaining the position information of the carrier medium, a dwell time of the carrier medium within the captured field of view is obtained; when the dwell time is greater than or equal to a preset dwell time of the carrier medium, the step of obtaining the position information of the carrier medium is performed. When the dwell time is less than the preset dwell time of the carrier medium, the step of obtaining the position information of the carrier medium is stopped. The preset dwell time may be any suitable time such as 2s or 3s set according to actual scene needs. For example, the preset dwell time of the carrier medium is 3s. When the dwell time of the carrier medium within the captured field of view obtained by the wearable device is 5s, the dwell time of the carrier medium within the captured field of view is greater than the preset dwell time of 3s of the carrier medium, and the step of obtaining the position information of the carrier medium is performed. When the dwell time of the carrier medium within the captured field of view obtained by the wearable device is 2s, the dwell time of the carrier medium within the captured field of view is less than the preset dwell time of 3s of the carrier medium, and the step of obtaining the position information of the carrier medium is stopped.

In some embodiments, the position information of the carrier medium includes first position information and second position information, in which the first position information is the distance from the carrier medium to the wearable device; the second position information is the position of the carrier medium in the image captured by the wearable device.

In some embodiments, the first position information of the carrier medium is the distance from the carrier medium to the wearable device. For example, the first position information of the carrier medium may be 40 cm, 45 cm or any other suitable distance. When the carrier medium is the user's palm and the wearable device is AR glasses, the first position information between the palm and the wearable device can be determined to be 40 cm, according to the suitable viewing distance from the eyes of a general user to the palm. It can be understood that if the user is a teenager, a user with a smaller build, or a user with a taller build, etc., the corresponding first position information can also be reasonably set, which is not limited here.

In some embodiments, the second position information is the position of the carrier medium in the image captured by the wearable device. For example, the position in the image captured by the wearable device may be any suitable image position such as the lower left corner, upper left corner, upper right corner, or lower right corner of the image. When the carrier medium is a palm, and the palm is within the captured field of view of the wearable device, the wearable device captures the palm and obtains the position of the palm in the captured image, and the wearable device obtains the second position information of the palm image.

S203: Displaying an input interface of the wearable device according to the position information of the carrier medium, in which the input interface is located on the carrier medium.

When the wearable device is AR glasses, the input interface is displayed through the waveguide display module of the AR glasses according to the position information of the carrier medium, such that the input interface is located on the carrier medium. When the carrier medium is a palm, the position information of the palm is used to realize that the displayed input interface matches the size of the palm and is displayed exactly on the palm.

In some embodiments, when the first position information of the carrier medium is within a preset distance range and the second position information of the carrier medium is within a preset position range, the input interface of the wearable device is displayed, the preset distance range is determined according to the distance from the carrier medium to the wearable device. The preset position range is a corresponding position range within the captured field of view of the wearable device.

In some embodiments, when the carrier medium is a palm and the wearable device is AR glasses, the preset distance range is a distance range determined according to the palm. The preset distance range may be a distance range determined according to factors such as the length of the user's arm and the comfort level when the user wearing the AR glasses observes the palm. When the user's palm is too close to the AR glasses, it is uncomfortable for the user wearing the AR glasses to view the palm, which is inconvenient for the user to perform corresponding input operations. When the user's palm is too far from the AR glasses, the palm cannot be detected within the captured field of view of the AR glasses, and it is inconvenient to perform input operations. The preset distance range can be from 30 cm to 60 cm, from 35 cm to 65 cm or any suitable distance range. When the carrier medium is a palm and the wearable device is AR glasses, and the preset distance range is 30 cm to 60 cm, the AR glasses detect that the first position information of the palm is 40 cm. At this time, the first position information of the palm is within the preset distance range. Then the AR glasses determine the position information of the palm. When the position information is within the preset position range, the input interface of the AR glasses is displayed. In other embodiments, when the preset distance range is 30 cm to 60 cm, the AR glasses detect that the first position information of the palm is 20 cm. At this time, the first position information of the palm is not within the preset distance range, so that the information input is ended, or the palm is adjusted to the distance of the AR glasses. The AR glasses reacquire the first position information of the palm, and redetermine whether the first position information of the palm is within the preset distance range. It should be noted that the arm lengths of different users may be different, and the preset distance range can be reasonably set according to factors such as the arm lengths of different users.

In some embodiments, when the carrier medium is a palm and the wearable device is AR glasses, the preset position range is the corresponding position range within the captured field of view of the AR glasses, it may be the preset position range corresponding to when the captured field angle of the AR glasses is 70° or 80°. When the palm is within the preset position range, the input interface of the AR glasses is displayed. When the palm is at the position where the input interface is located, the input interface is directly located on the palm. When the palm is not at the position where the input interface is located, the palm can move in the direction of the position of the input interface, or the AR glasses can rotate in the direction of the palm, so that the input interface moves in the direction of the position of the palm until the input interface is located on the palm. When the position information of the palm is not within the preset position range, that is, the palm is not detected within the captured field of view of the AR glasses, the step is ended, or the palm can be moved, or the AR glasses can be rotated until the position information of the palm is within the preset position range.

It should be noted that the position of the palm and the preset position range are variable. The purpose is to detect the palm within the preset distance range, so that the palm can support the input interface for display.

In some embodiments, when the first position information of the carrier medium is within the preset distance range and the second position information of the carrier medium is within the preset position range, the input interface of the wearable device is displayed. When the carrier medium is a palm and the wearable device is AR glasses, the known preset distance range is 30 cm to 60 cm, and the preset position range is the position range defined when the captured field angle of the AR glasses is 75°. The first position information of the palm is 42 cm, and the first position information of the palm as the carrier medium is within the preset distance range. Then, it is determined whether the second position information of the palm is within the preset position range. When the second position information of the palm is within the preset position range defined when the captured field angle is 75°, the input interface of the AR glasses is displayed. In some embodiments, when the position of the palm can display the input interface, the input interface of the AR glasses is directly displayed on the palm. When the position of the palm is not at the display position of the input interface, the user can adjust the position of the palm, or rotate the AR glasses to move the captured field of view, so that the input interface of the AR glasses is displayed on the palm.

In other embodiments, the known preset distance range is 35 cm to 65 cm, and the first position information of the palm is 80 cm. At this time, the first position information of the palm is not within the preset distance range, and the input interface of the AR glasses is not displayed.

It should be noted that when the first position information of the palm is within the preset distance range, the AR glasses can automatically adjust the size of the input interface according to the value of the first position information and adjust the input interface to a size suitable for the palm, and display the input interface at the palm through the imaging principle.

S204: In response to receiving an input operation on the input interface, determining input information according to the input operation.

The input operation performed by the user on the input interface may be clicking, sliding, touching, etc. When the user performs a clicking operation on the input interface, the wearable device obtains the first indication information and the second indication information of the user clicking the input interface. And the wearable device determines the input information, according to the first indication information and the second indication information.

In some embodiments, first indication information of a tip of an input implement used by the user is obtained. The first indication information can be obtained through a depth camera or a binocular RGB camera on the wearable device through triangulation or other methods. When the difference between the first indication information of the tip and the first position information of the carrier medium is within a preset range, it is determined that the tip of the input implement touches the input interface located on the carrier medium. The preset range may be from -1 mm to 1 mm, from -1.2 mm to 0.9 mm, or any other suitable range. The wearable device captures an image of the position where the tip touches the input interface; and obtains the second indication information of the tip on the input interface according to the position of the tip in the image captured by the wearable device. According to the second indication information of the tip on the input interface, the input information is determined, the first indication information of the tip is the distance from the tip to the wearable device, and the second indication information of the tip is the position where the tip touches the input interface.

It should be noted that the input implement may be a finger or a pen or any other suitable input implement, and the tip may be a fingertip or a pen tip or any other suitable tip, which is not limited.

In some embodiments, when the input implement is the user's finger, first indication information of the fingertip of the user's finger is obtained, the first indication information of the fingertip is the distance from the finger to the wearable device. When the difference between the first indication information of the fingertip and the first position information of the carrier medium is within a preset range, it is determined that the fingertip of the finger touches the input interface located on the carrier medium. When the carrier medium is a palm, the preset range is from -1 mm to 1 mm. When the first indication information of the fingertip is 20.1 cm and the first position information of the palm is 20 cm, the difference between the first position information of the fingertip and the first position information of the palm is 0.1 cm, that is, 1 mm. At this time, the difference between the first indication information of the fingertip and the first position information of the palm is within the preset range, and it is determined that the fingertip of the finger touches the input interface located on the palm. The wearable device can obtain the second indication information of the tip on the input interface. In other embodiments, when the carrier medium is a palm, the first indication information of the fingertip is 20.5 cm and the first position information of the palm is 20 cm, the difference between the first indication information of the fingertip and the first position information of the palm is 0.5 cm, that is, 5 mm. At this time, the difference between the first indication information of the fingertip and the first position information of the palm is not within the preset range, and it is determined that the fingertip of the finger does not touch the input interface located on the palm, and the wearable device cannot obtain the second indication information of the tip on the input interface.

In some embodiments, second indication information of the tip on the input interface is obtained, and input information is determined according to the second indication information of the tip on the input interface. For example, when the tip is a fingertip, if the fingertip sequentially touches MNO, GHI, GHI, ABC, MNO, MNO, and ABC in the pinyin nine-key layout, the positions of the fingertip on the input interface sequentially captured by the wearable device are the positions of MNO, GHI, GHI, ABC, MNO, MNO, and ABC, that is, the second indication information of the fingertip on the input interface is sequentially the positions of MNO, GHI, GHI, ABC, MNO, MNO, and ABC. According to the second indication information of the fingertip on the input interface, the wearable device determines that the input information is "ni hao ma" (" 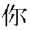 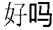 ", "How are you").

The information input method provided in the above embodiment detects a carrier medium within the captured field of view of the wearable device, obtains position information of the carrier medium, and displays an input interface of the wearable device according to the position information of the carrier medium, in which the position information of the carrier medium includes first position information and second position information. In response to receiving an input operation on the input interface, input information is determined according to the input operation. By displaying a virtual input interface on the carrier medium, it is more convenient for the user to use.

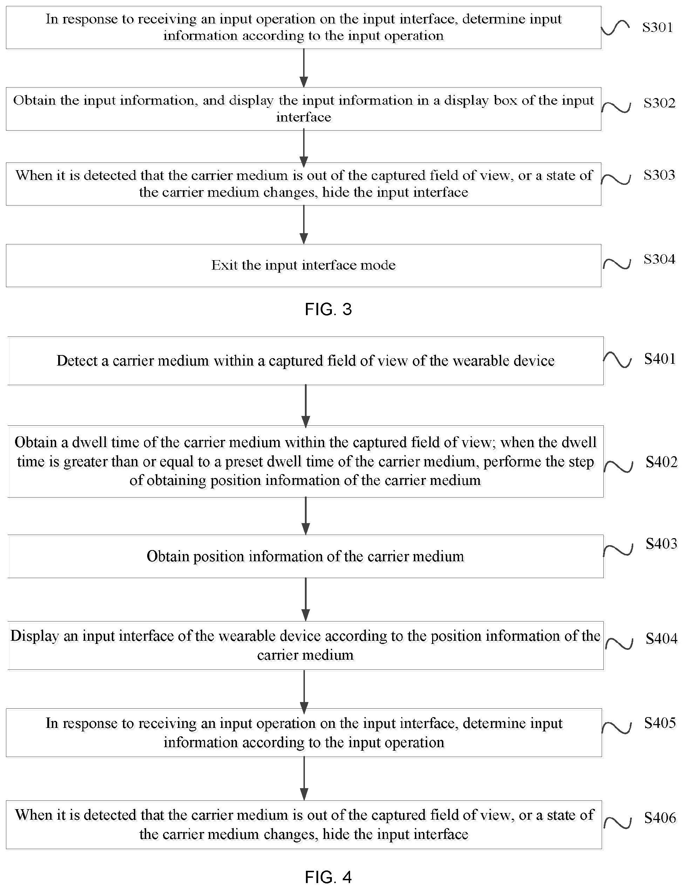

With reference to FIG. 3, FIG. 3 is a schematic flowchart of another information input method provided by an embodiment of the present disclosure. The information input method includes steps S301 to S304.

S301: In response to receiving an input operation on the input interface, determining input information according to the input operation.

In some embodiments, the operation performed by the user on the input interface may be clicking, sliding, touching, etc.

In some embodiments, when the input implement is a pen held by the user and the carrier medium is the user's palm, the preset range is from -1.2 mm to 0.9 mm. When the first indication information of the pen tip is 20.1 cm and the first position information of the palm is 20 cm, the difference between the first indication information of the pen tip and the first position information of the palm is 0.1 cm, that is, 1 mm. At this time, the difference between the first indication information of the pen tip and the first position information of the palm is within the preset range, and it is determined that the pen tip of the pen touches the input interface located on the palm. The wearable device can obtain the second indication information of the tip on the input interface. In other embodiments, when the difference between the first indication information of the pen tip and the first position information of the palm is not within the preset range, the wearable device cannot obtain the second indication information of the tip on the input interface.

S302: Obtaining the input information, and displaying the input information in a display box of the input interface.

In some embodiments, after the wearable device determines the input information, the input information is displayed in the display box of the input interface. For example, the wearable device determines that the input information is "ni hao ma" (" 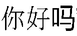 ", "How are you"), and the input information "ni" (" 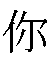 "), "hao" (" 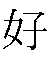 ") and "ma" (" 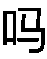 ") is sequentially displayed in the display box of the input interface.

S303: When it is detected that the carrier medium is out of the captured field of view, or a state of the carrier medium changes, hiding the input interface.

In some embodiments, after obtaining the user's operation on the input interface and determining the input information according to the operation, when it is detected that the carrier medium is out of the captured field of view, or a state of the carrier medium changes, the input interface is hidden. The change in the state of the carrier medium may be that the carrier medium changes from an open state to a closed state or any other state in which the input interface cannot be displayed. Hiding the input interface may be that the wearable device performs an operation of minimizing the input interface or performs an operation of exiting the input interface, etc.

S304: Exiting the input interface mode.

In some embodiments, the input interface mode can be exited through a button, voice, gesture, etc.

In some embodiments, the gesture action of the user can be obtained again. When the gesture action of the user matches a preset exit gesture action, the wearable device is controlled to exit the input interface mode. The preset exit gesture action may be two fists or other reasonable preset exit gesture actions. For example, when the gesture action of the user is two fists, the gesture action of the user matches the preset exit gesture action, and the wearable device is controlled to exit the input interface mode. In other embodiments, when the gesture action of the user is any gesture action other than two fists, the gesture action of the user does not match the preset exit gesture action, and the input interface mode is not exited at this time.

Another information input method provided in the above embodiment obtains the user's input operation on the input interface, obtains the input information, and displays the input information in the display box of the input interface. When it is detected that the carrier medium is out of the captured field of view, or a state of the carrier medium changes, the input interface is hidden. Finally, the operation of exiting the input interface mode is performed. In this information input method, after the user completes information input, the input interface mode of the wearable device can be exited in time through human-computer interaction based on the user's gesture action, which is convenient to operate and convenient for the user to perform operations.

In some embodiments, taking the AR glasses device and the user's palm as an example, the implementation process of the information input method may be analyzed more clearly. With reference to FIG. 4, FIG. 4 is a schematic block diagram of another information input method provided by an embodiment of the present disclosure, which may include steps S401 to S406.

S401: Detecting a carrier medium within a captured field of view of the wearable device.

In some embodiments, the user can lightly touch the leg of the AR glasses or click a control button of the AR glasses to turn on the camera of the AR glasses. The gesture action of the user is obtained in the camera of the AR glasses. When the gesture action of the user matches a preset input gesture action, the AR glasses are controlled to enter an input interface mode, and the palm within the captured field of view of the AR glasses is detected. When the captured field of view of the AR glasses is defined as an area with a captured field angle of 50° and a distance of 70 cm from the camera, and a palm is detected within the captured field of view with a captured field angle of 50° and a distance of 70 cm from the camera, the subsequent steps of the information input method are continued. When no palm is detected within the captured field of view with a captured field angle of 50° and a distance of 70 cm from the camera, the execution process of the information input method is terminated.

S402: Obtaining a dwell time of the carrier medium within the captured field of view; when the dwell time is greater than or equal to a preset dwell time of the carrier medium, performing the step of obtaining position information of the carrier medium.

In some embodiments, the dwell time of the palm within the captured field of view is obtained. When the dwell time of the palm within the captured field of view is detected to be 4s and the preset dwell time is 3s, the dwell time of the palm within the captured field of view is greater than the preset dwell time, and the step of obtaining the position information of the carrier medium is performed. In other embodiments, when the dwell time of the palm within the captured field of view is detected to be 2s and the preset dwell time is 3s, the dwell time of the palm within the captured field of view is less than the preset dwell time, the step of obtaining the position information of the carrier medium is not performed, and the information input method is ended.

S403: Obtaining position information of the carrier medium.

In some embodiments, the first position information of the palm obtained may be 40 cm. The first position information of the palm is the depth information, which represents the distance from the palm to the AR glasses. The second position information of the palm may be the position of the palm in the image captured by the AR glasses.

S404: Displaying an input interface of the wearable device according to the position information of the carrier medium.

In some embodiments, when the first position information of the palm is 40 cm, and the preset distance range of 30 cm to 60 cm, it is determined that the first position information is within the preset distance range. Then it is determined whether the second position information of the palm is within the preset position range. It is assumed that the preset position range is the preset position range corresponding to when the captured field angle of the AR glasses is 80°. When the second position information of the palm is within the preset position range corresponding to when the captured field angle is 80°, and the position of the palm at this time can just display the input interface, the input interface of the AR glasses is directly displayed on the palm. When the position of the palm at this time is different from the position of the input interface, the input interface can be displayed on the palm by moving the palm or the user turning the head to drive the input interface of the AR glasses to move. When the position information of the palm is not within the preset position range, the user can adjust the position of the palm, or rotate the AR glasses to change the captured field of view of the camera of the AR glasses, so that the input interface of the AR glasses is displayed on the palm. It should be noted that the position information of the palm and the input interface of the AR glasses is not fixed. The palm can change with the change of the position information of the input interface of the AR glasses, or the position information of the input interface of the AR glasses can be changed to adapt to the position of the palm.

S405: In response to receiving an input operation on the input interface, determining input information according to the input operation.

In some embodiments, the first indication information of the fingertip of the finger of the user's other hand is obtained. It is assumed that the first indication information of the fingertip is 20.1 cm and the preset range is from -1 mm to 1 mm. The difference between the first indication information of the fingertip of the other hand and the first position information of the palm is 0.1 cm, that is, 1 mm. At this time, the difference between the first indication information of the fingertip of the other hand and the first position information of the palm is within the preset range, and it is determined that the fingertip of the finger touches the input interface located on the palm.

In some embodiments, the second indication information of the fingertip on the input interface is obtained, and input information is determined according to the second indication information of the fingertip on the input interface. For example, if the second indication information of the fingertip on the input interface is sequentially the positions of MNO, GHI, GHI, ABC, MNO, MNO, and ABC in the pinyin nine-key layout, the input information can be determined to be "ni hao ma" (" 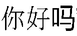 ", "How are you") according to the second indication information of the fingertip on the input interface.

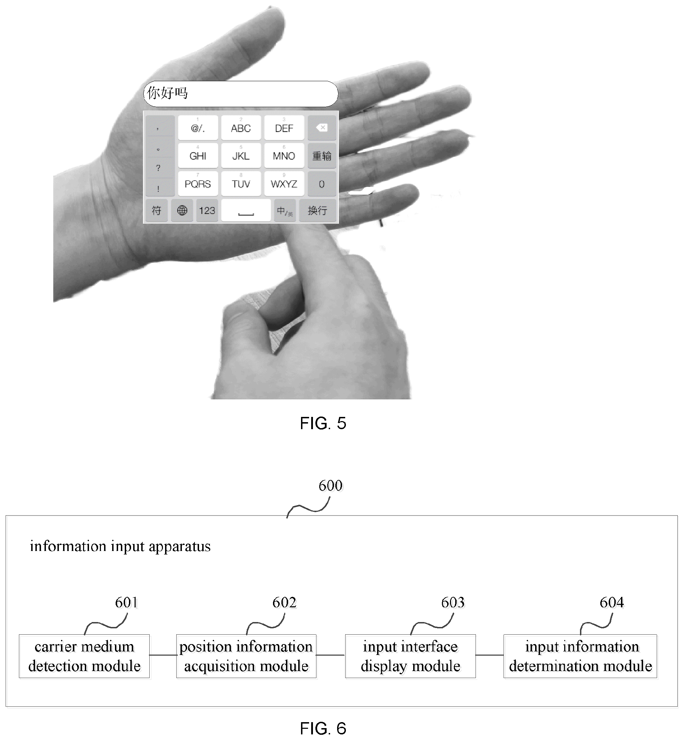

In some embodiments, after the input information is determined, the input information "ni" (" 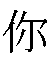 "), "hao" (" 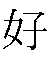 ") and "ma" (" 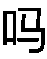 ") is sequentially displayed in the display box of the input interface. The input interface display effect of text input between the AR glasses and the palm can be referred to in FIG. 5.

S406: When it is detected that the carrier medium is out of the captured field of view, or a state of the carrier medium changes, hiding the input interface.

In some embodiments, after obtaining the user's operation on the input interface and determining the input information according to the operation, the input interface is hidden if any of the following conditions is detected: the palm is out of the captured field of view; or the state of the palm changes from an open state to a fist state; or the palm changes to any other state that make it impossible to display the input interface. At this time, the AR glasses obtain the gesture action of the user. When the gesture action of the user is two fists and matches the preset exit gesture action, the AR glasses are controlled to close the input interface mode.

The above embodiment provides an information input method of interaction between an AR glasses device and a palm, to describe the process of interaction between the AR glasses and the palm. The AR glasses can enter the input interface mode by obtaining the user's gesture operation, then the information input can be realized through the interaction between the AR glasses and the palm and fingers, finally the AR glasses close the input interface mode. In the entire information input process of interaction between the AR glasses device and the palm, there is without relying on the participation of other physical input interfaces, and the virtual input interface is presented on the carrier medium taking the palm as an example, so that the user can conveniently perform information input operations.

With reference to FIG. 6, FIG. 6 is a schematic block diagram of an information input apparatus provided by an embodiment of the present disclosure. The information input apparatus is used to execute the aforementioned information input method. The information input apparatus may be configured in a wearable device.

With reference to FIG. 6, the information input apparatus 600 includes: a carrier medium detection module 601, a position information acquisition module 602, an input interface display module 603, and an input information determination module 604.

It should be noted that a person skilled in the art can clearly understand that, for the convenience and brevity of description, the operation processes of the above-described apparatus and each module can refer to the corresponding processes in the foregoing method embodiments, and will not be repeated here.

The above apparatus can be implemented in the form of a computer program, and the computer program can run on the wearable device with reference to FIG. 1.

The embodiments of the present disclosure further provide a computer-readable storage medium. The computer-readable storage medium stores a computer program, the computer program includes program instructions, and the processor executes the program instructions to implement any information input method provided in the embodiments of the present disclosure.

The computer-readable storage medium may be an internal storage unit of the computer device in the foregoing embodiments, such as a hard disk or memory of the computer device. The computer-readable storage medium may also be an external storage device of the computer device, such as a plug-in hard disk, a Smart Media Card (SMC), a Secure Digital (SD) card, a Flash Card, etc. equipped on the computer device.

The above embodiments are some implementations of the present disclosure, but the protection scope of the present disclosure is not limited thereto. Any person skilled in the art can easily think of various equivalent modifications or replacements within the technical scope disclosed in the present disclosure, and these modifications or replacements may be covered by the protection scope of the present disclosure. Therefore, the protection scope of the present disclosure may be subject to the protection scope of the claims.

## Claims

1. An information input method, applied to a wearable device, **characterized in that** the information input method comprises:
detecting a carrier medium within a captured field of view of the wearable device;
obtaining position information of the carrier medium;
displaying an input interface of the wearable device according to the position information of the carrier medium, wherein the input interface is located on the carrier medium; and
in response to receiving an input operation on the input interface, determining input information according to the input operation.

2. The information input method according to claim 1, wherein the step of in response to receiving an input operation on the input interface, determining input information according to the input operation comprises:
obtaining first indication information of a tip of an input implement used by a user, wherein the first indication information of the tip is a distance from the tip to the wearable device;
when a difference between the first indication information of the tip and first position information of the carrier medium is within a preset range, determining that the tip of the input implement touches the input interface located on the carrier medium; and
obtaining second indication information of the tip on the input interface, and determining the input information according to the second indication information of the tip on the input interface.

3. The information input method according to claim 1, wherein before obtaining position information of the carrier medium, the information input method comprises:
obtaining a dwell time of the carrier medium within the captured field of view; and
when the dwell time is greater than or equal to a preset dwell time of the carrier medium, performing the step of obtaining the position information of the carrier medium.

4. The information input method according to claim 2, wherein before obtaining position information of the carrier medium, the information input method comprises:
obtaining a dwell time of the carrier medium within the captured field of view; and
when the dwell time is greater than or equal to a preset dwell time of the carrier medium, performing the step of obtaining the position information of the carrier medium.

5. The information input method according to claim 1, wherein the step of displaying an input interface of the wearable device according to the position information of the carrier medium comprises:
when first position information of the carrier medium is within a preset distance range and second position information of the carrier medium is within a preset position range, displaying the input interface of the wearable device;
wherein the position information of the carrier medium comprises the first position information and the second position information, the preset distance range is determined according to a distance from the carrier medium to the wearable device, and the preset position range is a corresponding position range within the captured field of view of the wearable device.

6. The information input method according to claim 1, wherein after determining input information, the information input method further comprises:
obtaining the input information, and displaying the input information in a display box of the input interface.

7. The information input method according to claim 2, wherein after determining input information, the information input method further comprises:
obtaining the input information, and displaying the input information in a display box of the input interface.

8. The information input method according to claim 3, wherein after determining input information, the information input method further comprises:
obtaining the input information, and displaying the input information in a display box of the input interface.

9. The information input method according to claim 5, wherein after determining input information, the information input method further comprises:
obtaining the input information, and displaying the input information in a display box of the input interface.

10. The information input method according to claim 1, wherein after the step of in response to receiving an input operation on the input interface, determining input information according to the input operation, the information input method comprises:
when it is detected that the carrier medium is out of the captured field of view, or a state of the carrier medium changes, hiding the input interface.

11. The information input method according to claim 2, wherein after the step of in response to receiving an input operation on the input interface, determining input information according to the input operation, the information input method comprises:
when it is detected that the carrier medium is out of the captured field of view, or a state of the carrier medium changes, hiding the input interface.

12. The information input method according to claim 3, wherein after the step of in response to receiving an input operation on the input interface, determining input information according to the input operation, the information input method comprises:
when it is detected that the carrier medium is out of the captured field of view, or a state of the carrier medium changes, hiding the input interface.

13. The information input method according to claim 5, wherein after the step of in response to receiving an input operation on the input interface, determining input information according to the input operation, the information input method comprises:
when it is detected that the carrier medium is out of the captured field of view, or a state of the carrier medium changes, hiding the input interface.

14. The information input method according to claim 6, wherein after the step of in response to receiving an input operation on the input interface, determining input information according to the input operation, the information input method comprises:
when it is detected that the carrier medium is out of the captured field of view, or a state of the carrier medium changes, hiding the input interface.

15. The information input method according to claim 1, further comprising:
obtaining a gesture action of a user;
when the gesture action of the user matches a preset input gesture action, controlling the wearable device to enter an input interface mode, and detecting a carrier medium within the captured field of view of the wearable device; and
when the gesture action of the user matches a preset exit gesture action, controlling the wearable device to exit the input interface mode.

16. The information input method according to claim 3, further comprising:
obtaining a gesture action of a user;
when the gesture action of the user matches a preset input gesture action, controlling the wearable device to enter an input interface mode, and detecting a carrier medium within the captured field of view of the wearable device; and
when the gesture action of the user matches a preset exit gesture action, controlling the wearable device to exit the input interface mode.

17. The information input method according to claim 10, further comprising:
obtaining a gesture action of a user;
when the gesture action of the user matches a preset input gesture action, controlling the wearable device to enter an input interface mode, and detecting a carrier medium within the captured field of view of the wearable device; and
when the gesture action of the user matches a preset exit gesture action, controlling the wearable device to exit the input interface mode.

18. An information input apparatus, **characterized in that** the information input apparatus comprises:
a carrier medium detection module, configured to detect a carrier medium within a captured field of view of the wearable device;
a position information acquisition module, configured to obtain position information of the carrier medium;
an input interface display module, configured to display an input interface of the wearable device according to the position information of the carrier medium, wherein the input interface is located on the carrier medium; and
an input information determination module, configured to, in response to receiving an input operation on the input interface, determine input information according to the input operation.

19. A wearable device, **characterized in that** the wearable device comprises a memory and a processor;
the memory is configured to store a computer program;
the processor is configured to execute the computer program and, when executing the computer program, implement the information input method according to claim 1.

20. A computer-readable storage medium, **characterized in that** the computer-readable storage medium stores a computer program, and when the computer program is executed by a processor, the processor is caused to implement the information input method according to claim 1.
